# EUROPÄISCHE PATENTANMELDUNG

(11) **EP 1 760 642 A2**
(43) Veröffentlichungstag der Anmeldung: **07.03.2007**
(21) Anmeldenummer: 06119908.9
(22) Anmeldetag: 31.08.2006
(51) Int. Cl.: G06K 19/14

(54) **Vorrichtung zur Ventilerkennung**

(30) Priorität: 01.09.2005 DE 102005041510
(71) Anmelder: Bosch Rexroth Pneumatics GmbH, 30856 Laatzen (DE)
(72) Erfinder: Meyer, Ernst-August, 30974 Wennigsen (DE)
(74) Vertreter: Kietzmann, Lutz

(57) **Zusammenfassung**

Ventilerkennungseinrichtung (1), insbesondere für eine Ventilaufnahme (2), welche zumindest einen Ventilaufnahmeplatz aufweist und wenigstens ein Ventil (3) aufnimmt, wobei die Aufnahme des mindestens einen Ventils (3) eine mechanische und /oder fluidische und /oder elektrische Verbindung umfasst, wobei das Ventil (3) auf dem zumindest einen Aufnahmeplatz auf der Ventilaufnahme (2) aufsteckbar ist, wobei die Ventilerkennungseinrichtung (1) zumindest einen dem Ventil (3) zugeordneten Transponder (4) aufweist, der eine das Ventil (3) identifizierende Kennung umfasst, welche mittels eines Lesegerätes (5) detektierbar ist, welches der Ventilaufnahme (2) zugeordnet ist, um die Kennung des Ventils (3) aus dem Transponder (4) auszulesen. Damit wird eine Ventilerkennungseinrichtung (1) geschaffen, welche eine Verwechselungsgefahr verschiedener Ventile (3) ausschließt und eine Inbetriebnahme fehlerhaft eingesetzter Ventile (3) innerhalb eines Ventilsystems vermeidet.

## Beschreibung

Die vorliegende Erfindung betrifft eine Ventilerkennungseinrichtung, insbesondere für eine Ventilaufnahme, welche zumindest einen Ventilaufnahmeplatz aufweist und wenigstens ein Ventil aufnimmt, wobei die Aufnahme des mindestens einen Ventils eine mechanische und /oder fluidische und /oder elektrische Verbindung umfasst, wobei das Ventil auf dem zumindest einen Aufnahmeplatz auf der Ventilaufnahme aufsteckbar ist.

Ventilsysteme, welche im Wesentlichen aus einer Ventilaufnahme aufgebaut sind, auf welcher über Ventilaufnahmeplätze ein oder mehrere Ventile durch ein einfaches Aufstecken aufgenommen werden können, sind hinreichend bekannt. Die Ventilaufnahmeplätze sind dabei auf der Oberseite der Ventilaufnahme angeordnet, so dass die Ventile zueinander benachbart parallel aufgesteckt werden können. Neben einer mechanischen Verbindung, welche als Clipsverbindung, Schraubenverbindung, Klemmverbindung oder einer anders gearteten mechanischen Verbindung ausgeführt sein kann, kann der Ventilaufnahmeplatz weiterhin eine fluidische und /oder elektrische Verbindung umfassen. Auf einer Ventilaufnahme kann eine Vielzahl von Ventilaufnahmeplätzen angeordnet sein, welche untereinander gleich ausgeführt sind, um eine hohe Flexibilität bezüglich der Austauschbarkeit von verschiedenen Ventilen zu schaffen. Um verschiedene Ventile auf einheitliche Ventilaufnahmeplätze aufstecken zu können, sind unterschiedliche Ventile, wie 5/2- oder 3/2-Wegeventile mit einer gehäuseseitig gleichen Schnittstelle ausgeführt, um diese untereinander austauschbar auf den Ventilaufnahmeplätzen der Ventilaufnahme anordnen zu können. Dabei stimmt die mechanische Verbindung der Gehäuseschnittstelle mit der Ventilaufnahme übergreifend bezüglich verschiedener Ventiltypen überein.

Zur Kennzeichnung verschiedener Ventiltypen können diese farblich unterschiedlich sein, oder eine Beschriftung aufweisen, anhand derer das Ventil vom Bediener erkannt werden kann. Beispielsweise kann ein Ventil symbolische Schaltfunktionen auf dem Ventilgehäuse aufweisen, welche ein 5/2- oder ein 3/2-Wegeventil, ein Sitzventil, ein Schieberventil oder weitere unterschiedliche Ventiltypen voneinander unterscheiden. Ebenso ist eine gehäuseseitige Unterscheidung möglich, anhand derer der Bediener erkennt, welche Funktionsmerkmale bzw. welche technischen Daten das Ventil auszeichnen.

Dabei tritt das Problem auf, dass aufgrund der übereinstimmenden Gehäuseschnittstellen zum Aufsetzen bzw. Einsetzen der Ventile auf die Ventilaufnahmeplätze der Ventilaufnahme diese untereinander vertauschbar sind, so dass es bei einem fehlerhaft eingesetzten Ventil zu Fehlfunktionen innerhalb eines Ventilsystems kommen kann. Beispielsweise kann bei einem Austausch aufgrund eines Defekts eines Ventils bei einer Reparatur oder Wartung ein falsches Ventil eingesetzt werden, Ventile untereinander vertauscht werden oder aus Unkenntnis des Bedieners ein Ventil mit einer falschen Schaltfunktion eingesetzt werden. Diese Gefahr kann zu Unfällen führen, welche auf mögliche Fehlfunktionen des Ventilsystems beruhen.

Es ist daher die Aufgabe der vorliegenden Erfindung, eine Ventilerkennungseinrichtung zu schaffen, welche eine Verwechselungsgefahr verschiedener Ventile ausschließt und eine Inbetriebnahme fehlerhaft eingesetzter Ventile innerhalb eines Ventilsystems vermeidet.

Diese Aufgabe wird ausgehend von einer Ventilerkennungseinrichtung gemäß dem Oberbegriff des Anspruchs 1 in Verbindung mit dessen kennzeichnenden Merkmalen sowie ein Ventilsystem mit einer Ventilerkennungseinrichtung gemäß dem Oberbegriff des Anspruchs 9 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Ventilerkennungseinrichtung zumindest einen dem Ventil zugeordneten Transponder aufweist, der eine das Ventil identifizierende Kennung umfasst, welche mittels eines Lesegeräts detektierbar ist, welches der Ventilaufnahme zugeordnet ist, um die Kennung des Ventils aus dem Transponder auszulesen.

Die Ventilerkennungseinrichtung gemäß der vorliegenden Erfindung ermöglicht einen verwechslungsfreien Einsatz einzelner Ventile, welche auf einer Ventilaufnahme aufgesetzt sind und in Betrieb genommen werden. Dabei wird die Möglichkeit einer berührungslosen Kommunikation eines an einem Ventil befestigten Transponders mit einem Lesegerät genutzt, welches im Ventilaufnahmeplatz angeordnet ist. Eine Kontrolle der Ventilkennung über eine Aufschrift, über eine farbliche Unterscheidung oder über eine sonstige auf dem Ventil angebrachte Markierung durch den Bediener entfällt, so dass die Gefahr von Verwechslungen durch den Bediener entweder aus Unachtsamkeit oder aus Unkenntnis vermieden werden kann. Ein Transponder beschreibt dabei meist eine drahtlose Kommunikationseinheit, welche eingehende Signale aufnimmt und automatisch auf diese reagiert.

Der Begriff Transponder setzt sich daher aus den Wortteilen Transmitter und Responder zusammen. Dabei werden passive und aktive Transponder voneinander unterschieden, wobei bei passiven Transpondern die zur Kommunikation und zur Abarbeitung interner Prozesse benötigte Energie ausschließlich aus dem Feld bezogen wird, welches das Lesegerät aussendet. Daher arbeiten passive Transponder eigenenergielos. Aktive Systeme verfügen hingegen über eine eigene Energieversorgung, welche gemäß der vorliegenden Erfindung der Energieversorgung des Ventils entnommen werden kann. Gemäß der vorliegenden Erfindung sind jedoch passive Transponder bevorzugt einsetzbar, da die Entfernung zum Lesegerät sehr gering ist und keine großen Sendeleistungen benötigt werden. Sobald das Ventil auf dem Ventilaufnahmeplatz aufgesteckt ist, und der am bzw. im Ventil angeorndete Transponder in die Nähe des Lesegeräts gebracht ist, kann eine Kommunikation zwischen dem Lesegerät und dem Transponder aufgebaut werden. Das Lesegerät liest die Ventildaten aus dem Transponder aus und leitet diese an eine zentrale Steuerung weiter. Diese kann anhand der Informationen, welche im Transponder gepeichert sind, erkennen, ob das Ventil, welches auf dem Ventilaufnahmeplatz aufgesteckt ist, die richtigen Spezifikationen aufweist. Somit ist es unmöglich, dass verschiedene Ventile wie 3/2- oder 5/2-Wegeventile miteinander vertauscht werden. Aufgrund der elektronischen Überwachung mittels der Lesegeräte kann sichergestellt werden, dass für jeden einzelnen Ventilaufnahmeplatz nur die Ventile in Betrieb genommen werden können, welche die für ihren Einsatz vorgesehenen Funktionen aufweisen, die geforderten technischen Daten des Ventils umfassen und eine bestimmungsgemäße Funktion des Ventilsystems ermöglicht ist.

Vorteilhafterweise umfasst die Kennung des Transponders technische Daten des Ventils, an welchem der Transponder angeordnet ist. Die mittels des Transponders an das Lesegerät übertragenen technischen Daten können die Spezifikationen des Ventils umfassen, und dieses eindeutig identifizieren. Mittels dieser Identifikation kann der Ventiltyp, die Funktionsweise des Ventils oder weitere Daten des Ventils bestimmt werden, so dass diese Daten dem späteren Gebrauch des Ventils zu Grunde gelegt werden. Dabei können gleiche Ventile gleiche technische Daten und damit die gleichen Informationen im zugeordneten Transponder aufweisen, welche über die Kennung des Transponders an das Lesegerät übertragen werden.

Eine vorteilhafte Ausführungsform der vorliegenden Erfindung sieht vor, dass zur Auslesung der Kennung eine Funkstrecke zwischen dem Transponder und dem Lesegerät aufbaubar ist, über welche die Kennung vom Transponder an das Lesegerät übertragbar ist. Die Übertragungsfrequenz kann dabei im kHz oder MHz Bereich liegen, wobei diese Frequenz sowohl für die Kommunikation vom Lesegerät zum Transponder als auch vom Transponder zum Lesegerät verwendbar ist. Bei einem passiven Transponder wird in einer Drahtspule, welche am Transponder angeordnet ist, eine Spannung induziert, welche ausreicht, um einen Siliziumchip des Transponders zu speisen. Dieser kann ebenfalls über die Drahtspule eine Funkverbindung mit dem Lesegerät aufbauen, und die Kennung übertragen, welche die technischen Daten des Ventils übermittelt, die im Transponder gespeichert sind.

Um die Länge der Funkstrecke zwischen dem Transponder und dem Lesegerät zu minimieren, wird vorgeschlagen, dass das Ventil ein Gehäuse umfasst, wobei der Transponder an der Gehäuseseite des Ventils angeordnet ist, welche im aufgesteckten Zustand an den Aufnahmeplatz der Ventilaufnahme angrenzt. Damit kann der Transponder unmittelbar über dem bzw. angrenzend am Lesegerät platziert werden, wobei dieser auf der Gehäuseoberfläche angebracht sein kann. Ebenso besteht die Möglichkeit, den Transponder im Ventilgehäuse zu integrieren, wobei dieser innenseitig im Gehäuse ebenfalls in der Nähe des Lesegeräts angeordnet ist, wenn das Ventil auf dem Ventilaufnahmeplatz aufgesteckt ist. Eine Befestigung des Transponders an der Außenseite des Gehäuses kann eine Klebeverbindung umfassen, wobei der Transponder sowohl in einer flachen Ausführung als auch in einer kapselförmigen Ausführung eingesetzt werden kann. Bei einer flachen, folienähnlichen Ausführung kann der Transponder an die Außenseite des Gehäuses aufgeklebt werden, wobei bei einem kapselförmigen Gehäuse des Transponders eine entsprechende Aufnahmegeometrie im Ventilgehäuse vorgesehen sein kann.

Vorteilhafterweise weist die Funkstrecke eine Sendeleistung auf, welche nur über die Entfernung zu einem Transponder des Ventils ein Auslesen der Kennung ermöglicht, welches auf dem entsprechenden Aufnahmeplatz angeordnet ist. Die Länge der Funkstrecke weist dabei vorteilhafterweise einen Wert von ungefähr 0,5 mm bis 20 mm, bevorzugt einen Wert von ungefähr 2 mm bis 12 mm und besonders bevorzugt einen Wert von ungefähr 6mm auf. Damit wird vermieden, dass ein Lesegerät mit einem Transponder kommuniziert und eine Kennung austauscht, welche nicht dem Ventil zugeordnet ist, das sich auf dem entsprechenden Ventilaufnahmeplatz befindet und mit dem zu kommunizierenden Lesegerät ausgestattet ist. Je nach Ausführung der Ventilaufnahme können die Ventile parallel zueinander auf benachbart angeordneten Ventilaufnahmeplätzen aufgesteckt werden, wobei jeder Ventilaufnahmeplatz ein eigenes Lesegerät umfassen kann. Um zu vermeiden, dass ein Lesegerät eines benachbarten Ventilaufnahmeplatzes einen Transponders ausliest, welcher an einem Ventil angeordnet ist, welches zumindest an einem benachbarten Ventilaufnahmeplatz aufgesteckt ist, kann die Länge der Funkstrecke über die Höhe der Sendeleistung eingestellt werden. Diese kann eine Leistung umfassen, welche eine Funkstrecke ermöglicht, die nicht länger ist, als zur Auslesung des Transponders des entsprechenden Ventils erforderlich ist, welches auf dem zugeordneten Ventilaufnahmeplatz aufgesteckt ist. Dabei kann die Länge der Funkstrecke einen Wert von ungefähr 6 mm aufweisen, wobei diese in Abhängigkeit der Geometrie der Ventilaufnahme und der Ventile hinsichtlich ihrer Größe variieren kann. Zusätzlich ist es möglich, dass zwischen den Ventilaufnahmeplätzen Abschirmmittel angeordnet werden, welche eine ungewollte Auslesung eines benachbarten Transponders durch ein Lesegerät vermeidet. Dadurch, dass ein Transponder unmittelbar mit einem Lesegerät in Deckung gebracht werden kann, kann die maximal mögliche Länge der Funkstrecke auf unter 1 mm begrenzt werden. Weiterhin besteht die Möglichkeit, die Übermittlung der Kennung und damit der technischen Daten des Ventils über einen direkten elektrischen Kontakt zu realisieren, wobei dieser von einem Speicher, welcher am Ventil angeordnet ist, beispielsweise über Kontaktstifte, an ein Lesegerät übertragen werden. Damit kann die Anwendung einer Funkstrecke vermieden werden. Als eine weitere mögliche Ausführungsform kann alternativ die Ventilkennung über ein am Ventil angebrachtes EPROM erfolgen, welches über Kontaktstifte elektrische kontaktiert wird oder beispielsweise optisch oder elektrisch auslesbar ist.

Gemäß einer vorteilhaften Ausführung der vorliegenden Erfindung wird vorgeschlagen, dass das Lesegerät über eine Verbindung mit einer zentralen Steuerung verbunden ist, wobei das Lesegerät die Kennung des Ventils über die Verbindung an die zentrale Steuerung liefert.

Damit kann die zentrale Steuerung über die Verbindung bzw. die Verbindungen mit den Lesegeräten die Kennung der Ventile auslesen, wobei in der zentralen Steuerung technische Daten des mindestens einen Ventils speicherbar und die ausgelesenen technischen Daten des Ventils mit den gespeicherten technischen vergleichbar sind, so dass die zentrale Steuerung die Ventile nur dann freigibt und /oder ansteuert, wenn die technischen Daten übereinstimmen. Nur so kann ein sicherer Betrieb des Ventilsystems gewährleistet werden, da erst dann eine Freigabe der einzelnen Ventile bzw. des Ventilsystems erfolgt, wenn die gespeicherte Kennung mit der über das Lesegerät ausgelesenen Kennung des Ventils übereinstimmt. Die in der zentralen Steuerung gespeicherten technischen Daten, welche die Bestückung des Ventilsystems beinhalten, können in Abhängigkeit vom Anwendungsfall angepasst werden, indem die technischen Daten löschbar sind und abhängig vom Einsatz des Ventilsystems neu eingelesen oder programmiert werden können. Damit kann eine Flexibilität des Gesamtsystems erhalten bleiben, so dass in Abhängigkeit vom Schaltsystem bzw. von der Funktionsweise des Ventilsystems verschiedene Ventile mit verschiedenen technischen Daten in Betrieb genommen werden können. Lediglich ein sich im Betrieb befindliches Ventilsystem ohne Änderung des Funktionsprinzips bzw. des Schaltsystems kann nicht mit falschen Ventilen in Betrieb genommen werden, da die Steuerung bei einer fehlenden Übereinstimmung der technischen Daten entweder das Ventilgesamtsystem oder einzelne Ventile nicht freigibt.

Gemäß eines weiteren Ausführungsbeispiels der Erfindung wird vorgeschlagen, dass die Übereinstimmung der technischen Daten über ein Anzeigemittel am Ventil und /oder an der Ventilaufnahme selbst anzeigbar ist, wobei das Lesegerät die Information über eine elektrische Verbindung an das Anzeigemittel sendet. Damit ist es dem Bediener möglich, die Information über die Übereinstimmung der technischen Daten und damit die Richtigkeit des eingesetzten Ventils am Ventil selbst abzulesen. Das Anzeigemittel kann beispielsweise eine Leuchtdiode o.ä. umfassen. Somit muss die Information nicht einer häufig fern vom Ventil bzw. von der Ventilaufnahme angeordneten zentralen Steuerung entnommen werden, diese wird direkt nach der Montage des Ventils an den Bediener ausgegeben. Alternativ zur Anzeige der Information am Ventil kann das Anzeigemittel wie beispielsweise eine Leuchtdiode auch an der Ventilaufnahme angeordnet sein, sodass vor bzw. nahe dem jeweiligen Ventilaufnahmeplatz das zugeordnete Anzeigemittel angeordnet ist. Ist das Anzeigemittel als Leuchtdiode ausgeführt, kann beispielsweise mittels einer farblichen Unterscheidung oder mittels einer aufleuchtenden bzw. nicht aufleuchtenden Leuchtdiode die Richtigkeit des montierten Ventils angezeigt werden.

Die vorliegende Erfindung betrifft weiterhin ein Ventilsystem mit einer Ventilerkennungseinrichtung mit zumindest einem jeweils einem Ventil zugeordneten Transponder, der eine das Ventil identifizierende Kennung umfasst, welche mittels eines Lesegeräts detektierbar ist, welches der Ventilaufnahme zugeordnet ist, um die Kennung des Ventils aus dem Transponder auszulesen. Dieses Ventilsystem kann dabei so ausgeführt sein, dass die Ventilerkennungseinrichtung eine zentrale Steuerung umfasst, in der technische Daten des mindestens einen Ventils speicherbar und die ausgelesenen technischen Daten des Ventils mit den gespeicherten technischen Daten vergleichbar sind, so dass die zentrale Steuerung die Ventile nur dann freigibt und /oder ansteuert, wenn die technischen Daten übereinstimmen. Die Ventilerkennungseinrichtung kann dabei entweder mit einer zentralen Steuerung des gesamten fluidischen Systems verbunden sein oder die zentrale Steuerung ist in der Ventilaufnahme integriert. Das Lesegerät, welches in der Ventilaufnahme einzeln an jedem Ventilaufnahmeplatz angeordnet ist, kann selbst eine zentrale Steuerungsfunktion übernehme n, indem die Freigabe des entsprechenden Ventils, welches mit einem dazugehörigen Transponder über dem Lesegerät angeordnet ist, durch das Lesegerät selbst und damit innerhalb der Ventilaufnahme erfolgt.

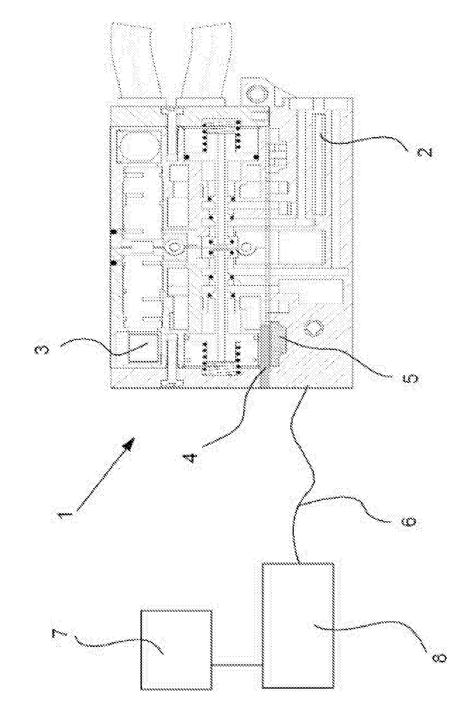

Weitere die Erfindung verbessernde Maßnahmen sind in den Unteransprüchen angegeben oder werden nachstehend gemeinsam mit der Beschreibung eines bevorzugten Ausführungsbeispiels der Erfindung anhand der einzigen Figur näher dargestellt. Diese zeigt:
Eine schematische Darstellung einer Ventilerkennungseinrichtung mit einem
Transponder, welcher an einem Ventil angeordnet ist und einem Lesegerät, welches innerhalb eines Ventilaufnahmeplatzes angeordnet ist.

In der Figur ist eine schematische Darstellung einer Ventilerkennungseinrichtung 1 gezeigt. Diese umfasst ein Lesegerät 5, welches in einer Ventilaufnahme 2 angeordnet ist, wobei die Ventilaufnahme 2 eine Vielzahl von Ventilen 3 aufnehmen kann, welche parallel zu einander benachbart auf Ventilaufnahmeplätzen aufgesteckt werden können. Das Lesegerät 5 ist entsprechend der Anzahl der Ventilaufnahmeplätze der Ventilaufnahme 2 mehrfach vorhanden, wobei in der Figur aufgrund der Darstellung der Ventilerkennungseinrichtung 1 im Querschnitt nur ein Lesegerät 5 gezeigt ist. Am Ventil 3 ist ein Transponder 4 angeordnet, welcher im aufgesteckten Zustand des Ventils 3 mit dem Lesegerät 5 in Deckung gebracht wird. Somit kann der Transponder 4 im aufgesteckten Zustand des Ventils 3 eine Kennung an das Lesegerät 5 übertragen, welches mittels einer Funkstrecke realisierbar ist. Die Kennung, welche durch das Lesegerät 5 aus dem Transponder 4 ausgelesen wird, umfasst technische Daten des entsprechenden Ventils 3, wobei diese technischen Daten über eine Verbindung 6 an eine zentrale Steuerung 7 übertragen werden. Die zentrale Steuerung 7 umfasst einen Speicher 8, dem die technischen Daten unter Zuordnung der jeweiligen Ventilaufnahmeplätze der Ventile 3 gespeichert sind. Nach dem Auslesen der technischen Daten durch das Lesegerät 5 und der Übertragung dieser technischen Daten über die Verbindung 6 an die Steuerung 7, vergleicht diese die ausgelesenen technischen Daten mit den im Speicher 8 gespeicherten technischen Daten. Bei einer Übereinstimmung der technischen Daten gibt die zentrale Steuerung 7 den Betrieb des betreffenden Ventils bzw. des Ventilsystems frei, wohingegen bei einer fehlenden Übereinstimmung das betreffende Ventil 3 zum Betrieb nicht freigegeben wird.

Somit kann sichergestellt werden, dass nur dann ein Ventil 3 in einem Ventilsystem in Betrieb genommen werden kann, wenn dieses die richtigen technischen Daten umfasst. Somit kann eine Verwechslung beispielsweise eines 3/2- mit einem 5/2-Wegeventil vermieden werden, um Fehlfunktionen des Ventilsystems zu vermeiden und damit ein Unfallrisiko bzw. ein Schadensrisiko zu minimieren. Der Transponder 4 trägt dabei die technischen Daten, welche das Ventil 3 betreffen, an dem der Transponder 4 angebracht ist. Der Transponder 4 ist an der Gehäuseseite des Ventils 3 angeordnet, welche nach einem Aufstecken des Ventils 3 auf einen Ventilaufnahmeplatz an die Ventilaufnahme 2 angrenzt, so dass die Funkstrecke zwischen dem Transponder 4 und dem Lesegerät 5 besonders kurz ausgeführt sein kann. Gemäß der vorliegenden Erfindung kann an jedem Ventil 3 ein Transponder 4 angeordnet sein, wobei in jedem Ventilaufnahmeplatz in der Ventilaufnahme 2 ein zugeordnetes Lesegerät 5 angeordnet ist. Die zentrale Steuerung 7 kann als Rechnersystem ausgeführt sein, welches zusätzliche speziell zur Ventilerkennungseinrichtung 1 hinzugefügt wird oder Bestandteil einer speicherprogrammierbaren Steuerung (SPS) sein kann. Die Verbindung 6 zwischen dem Lesegerät 5 und der zentralen Steuerung 7 kann entweder als separate elektrische Leitung vorgesehen werden, oder die ohnehin zwischen einer Ventilaufnahme 2 und einer Steuerung vorhandene elektrische Verbindungen umfassen.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- **1**: Ventilerkennungseinrichtung
- **2**: Ventilaufnahme
- **3**: Ventil
- **4**: Transponder
- **5**: Lesegerät
- **6**: Verbindung
- **7**: zentrale Steuerung
- **8**: Speicher

## Patentansprüche

1. Ventilerkennungseinrichtung **(1),** insbesondere für eine Ventilaufnahme **(2),** welche zumindest einen Ventilaufnahmeplatz aufweist und wenigstens ein Ventil **(3)** aufnimmt, wobei die Aufnahme des mindestens einen Ventils **(3)** eine mechanische und /oder fluidische und /oder elektrische Verbindung umfasst, wobei das Ventil **(3)** auf dem zumindest einen Aufnahmeplatz auf der Ventilaufnahme **(2)** aufsteckbar ist,
**dadurch gekennzeichnet, dass** die Ventilerkennungseinrichtung **(1)** zumindest einen dem Ventil **(3)** zugeordneten Transponder **(4)** aufweist, der eine das Ventil **(3)** identifizierende Kennung umfasst, welche mittels eines Lesegerätes **(5)** detektierbar ist, welches der Ventilaufnahme **(2)** zugeordnet ist, um die Kennung des Ventils **(3)** aus dem Transponder **(4)** auszulesen.

2. Ventilerkennungseinrichtung **(1)** nach Anspruch 1,
**dadurch gekennzeichnet, dass** die Kennung des Transponders **(4)** technische Daten des Ventils **(3)** umfasst, an welchem der Transponder **(4)** angeordnet ist.

3. Ventilerkennungseinrichtung **(1)** nach Anspruch 1 oder 2,
**dadurch gekennzeichnet, dass** zur Auslesung der Kennung eine Funkstrecke zwischen dem Transponder **(4)** und dem Lesegerät **(5)** aufbaubar ist, über welche die Kennung vom Transponder **(4)** an das Lesegerät **(5)** übertragbar ist.

4. Ventilerkennungseinrichtung **(1)** nach einem der vorstehenden Ansprüche,
**dadurch gekennzeichnet, dass** das Ventil **(3)** ein Gehäuse umfasst, wobei der Transponder (4) an der Gehäuseseite des Ventils **(3)** angeordnet ist, welche im aufgesteckten Zustand an den Aufnahmeplatz der Ventilaufnahme **(2)** angrenzt.

5. Ventilerkennungseinrichtung (1) nach einem der vorstehenden Ansprüche,
**dadurch gekennzeichnet, dass** die Funkstrecke eine Sendeleistung aufweist, welche nur über die Entfernung zu einem Transponder (4) des Ventils (3) ein Auslesen der Kennung ermöglicht, welches auf dem entsprechenden Aufnahmeplatz angeordnet ist.

6. Ventilerkennungseinrichtung (1) nach Anspruch 5,
**dadurch gekennzeichnet, dass** die Länge der Funkstrecke einen Wert von ungefähr 0,5mm bis 20mm, bevorzugt einen Wert von ungefähr 2mm bis 12mm und besonders bevorzugt einen Wert von ungefähr 6mm aufweist.

7. Ventilerkennungseinrichtung (1) nach einem der vorstehenden Ansprüche,
**dadurch gekennzeichnet, dass** das Lesegerät (5) über eine Verbindung (6) mit einer zentralen Steuerung verbunden ist, wobei das Lesegerät (5) die Kennung des Ventils (3) über die Verbindung (6) an die zentrale Steuerung (7) liefert.

8. Ventilerkennungseinrichtung (1) nach einem der vorstehenden Ansprüche,
**dadurch gekennzeichnet, dass** in der zentralen Steuerung (7) technische Daten des mindestens einen Ventils (3) speicherbar sind, wobei mit der zentralen Steuerung (7) die ausgelesenen technischen Daten des Ventils mit den gespeicherten technischen Daten vergleichbar sind, sodass die zentrale Steuerung (7) die Ventile (3) nur dann freigibt und /oder ansteuert, wenn die technischen Daten übereinstimmen.

9. Ventilerkennungseinrichtung (1) nach einem der vorstehenden Ansprüche,
**dadurch gekennzeichnet, dass** die Übereinstimmung der technischen Daten über ein Anzeigemittel am Ventil (3) und /oder an der Ventilaufnahme (2) selbst anzeigbar ist, wobei das Lesegerät (5) die Information über eine elektrische Verbindung an das Anzeigemittel sendet.

10. Ventilsystem mit einer Ventilerkennungseinrichtung **(1)** mit zumindest einem jeweils einem Ventil **(3)** zugeordneten Transponder **(4),** der eine das Ventil identifizierende Kennung umfasst, welche mittels eines Lesegerätes **(5)** detektierbar ist, welches der Ventilaufnahme **(2)** zugeordnet ist, um die Kennung des Ventils **(3)** aus dem Transponder **(4)** auszulesen.

11. Ventilsystem nach Anspruch 10,
**dadurch gekennzeichnet, dass** die Ventilerkennungseinrichtung **(1)** eine zentrale Steuerung **(7)** umfasst, in der technische Daten des mindestens einen Ventils **(3)** speicherbar sind, wobei mit der zentralen Steuerung **(7)** die ausgelesenen technischen Daten des Ventils **(3)** mit den gespeicherten technischen Daten vergleichbar sind, sodass die zentrale Steuerung **(7)** die Ventile **(3)** nur dann freigibt und /oder ansteuert, wenn die technischen Daten übereinstimmen.
